Europäisches Patentamt

European Patent Office

Office européen des brevets

(19)

(11) Publication number: **0 237 011 B1**

(12) **EUROPEAN PATENT SPECIFICATION**

(45) Date of publication of patent specification: **08.05.91**　(51) Int. Cl.⁵: **G21C 21/02**, G21C 21/00

(21) Application number: **87103370.0**

(22) Date of filing: **10.03.87**

(54) Apparatus and method for loading pellets into fuel rods.

(30) Priority: **14.03.86 US 839485**

(43) Date of publication of application:
**16.09.87 Bulletin 87/38**

(45) Publication of the grant of the patent:
**08.05.91 Bulletin 91/19**

(84) Designated Contracting States:
**BE ES FR GB IT SE**

(56) References cited:
**DE-A- 3 104 341
US-A- 3 940 908
US-A- 3 965 648
US-A- 4 243 078**

(73) Proprietor: **WESTINGHOUSE ELECTRIC COR-
PORATION
Westinghouse Building Gateway Center
Pittsburgh Pennsylvania 15222(US)**

(72) Inventor: **Widener, Wade Hampton
1502 Granby Road
Cayce South Carolina 29033(US)**

(74) Representative: **Casalonga, Axel et al
BUREAU D.A. CASALONGA - JOSSE Moras-
sistrasse 8
W-8000 München 5(DE)**

Rank Xerox (UK) Business Services

## Description

The present invention relates to an apparatus for loading pellets into tubular rods, especially fuel rods, for use in nuclear reactors.

Fuel rods commonly used in nuclear reactors consist of sealed tubes, or tubular rods, containing fissile material in the form of cylindrical pellets stacked end-to-end.

An early practice of loading pellets into such tubes was to suitably support the tubes in a fixed position relative to a tray containing fuel pellets arranged in columns each accurately aligned longitudinally with the open end of one of the tubes, and then to push the columns of pellets manually into the tubes aligned therewith. Thereafter, the empty tray was replaced with one holding a new supply of pellets arranged in columns, and the process was repeated until all of the tubes were loaded. More recently, vibratory feed tables have been employed in loading pellets into nuclear fuel rods, as disclosed in U.S. patents US-A 3,940,908 and US-A 3,965,648, for example.

A requirement well recognized in the art is that the pellets used in the fuel rods be kept within close size tolerances since improperly sized pellets will undesirably attain non-uniform temperatures. Although pellet manufacturers perform numerous checks during the manufacturing process in an endeavor to detect and replace imperfectly sized pellets, it still is believed possible for pellets which are undersized with respect to diameter to escape detection and to be loaded into fuel rods.

It is the principal object of this invention to provide an improved pellet loading apparatus which will virtually eliminate this problem.

The invention accordingly resides in apparatus for loading cylindrical pellets of predetermined diametric size into tubular rods, comprising rod support means for supporting the tubular rods in a generally horizontal disposition and in laterally spaced relationship with respect to each other, pellet support and guide means for supporting the cylindrical pellets arranged end-to-end in columns each longitudinally aligned with one of the tubular rods supported on the rod support means, and means for advancing the columns of pellets on the pellet support and guide means toward the respective tubular rods longitudinally aligned therewith, characterized by transition guide means interposed between the rod support means and pellet support and guide means for guiding the advancing columns of pellets into the respective tubular rods, said transition guide means including pellet segregating means which permit pellets of said predetermined diametric size to fully advance into the associated tubular rods, and cause pellets of less than said predetermined diametric size to drop to a lower level below the level of the normally sized pellets in the same column, said transition guide means further including means cooperable with any dropped pellet to prevent further advance thereof and of the pellets trailing it in the same column.

It will be appreciated that any pellet dropping from an advancing column to the lower level is positively prevented from being fed into a tubular rod. Moreover, since it and all the pellets trailing it are stopped from further advancing, the presence of the improperly dimensioned pellet is clearly signalled to the person or persons attending the equipment, who can then readily remove the imperfect pellet and replace it with a good one.

In the preferred embodiment to be described in detail later herein, the pellet segregating means defines pairs of parallel spaced tracks for receiving the pellets in the respective columns advancing from the pellet support means, the spacing between each pair of parallel spaced tracks being such as to enable pellets of said predetermined diametric size to proceed therealong and into the associated tubular rod, and to cause pellets of less than said predetermined diametric size to drop to said lower level through the space between the tracks. The pellet segregating means includes pellet deflecting means for momentarily upsetting each pellet, as it advances onto the associated pair of tracks, so as to minimize its frictional end-to-end contact with immediately leading and trailing pellets advancing in the same column. The means for preventing further advance of dropped pellets comprises stops which protrude into the paths of movement of the pellets having dropped to said lower level.

Preferably, the transition guide means includes means for ensuring and maintaining longitudinal alignment of the pellet-receiving end of each tubular rods on the rod support means with the respective pellet segregating means associated therewith, and further includes abutment means cooperable with the pellet-receiving ends of the respective tubular rods on the rod support means to determine and maintain the longitudinal disposition of said pellet-receiving ends relative to the respective pellet segregating means associated therewith.

The preferred embodiment of the invention will now be described, by way of example only, with reference to the accompanying drawings, in which:

Figure 1 is a schematic, perspective view of a pellet loading apparatus including features embodying the invention;

Figure 2 is an enlarged fragmentary end view of transition guide means forming part of the apparatus shown in Figure 1;

Figure 3 is a sectional view taken substantially along the line 3-3 of Figure 2;

Figure 4 is a fragmentary perspective view, partly sectioned, of the transition guide means;

Figure 5 is a view similar to Figure 3 and illustrating the manner in which pellets of proper size pass across the pellet segregation means;

Figure 6 is a sectional view taken substantially along the line 6-6 of Figure 5 in slightly enlarged scale; and

Figures 7 and 8 correspond to Figures 5 and 6, respectively, but illustrate the manner in which an under-sized pellet drops below the level of the remaining pellets during passage across the segregation means.

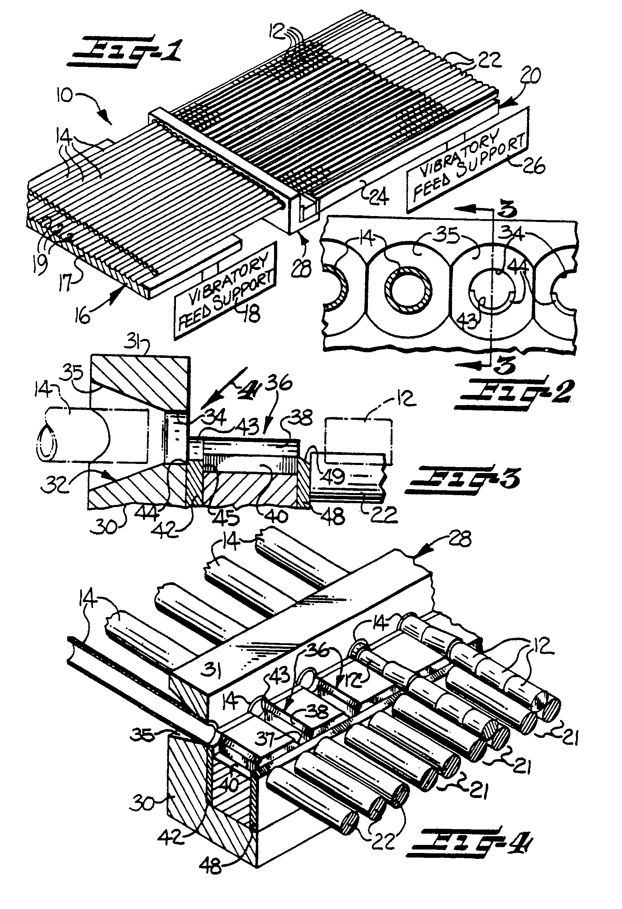

Referring now to the drawings, the pellet loading apparatus 10 illustrated in Fig. 1 and specifically adapted for use in loading cylindrical fuel pellets 12 into tubular fuel rods 14 comprises rod support means 16 for supporting a plurality of tubular fuel rods 14 in a laterally aligned, parallel array. The rod support means 16 includes a table 17 supported by a vibratory feed support 18 of conventional design which is adapted to impart a reciprocatory movement to the table 17 for advancing the pellets 12 into and through the rods 14 in the manner described in greater detail in the above-mentioned U.S. patents. The table 17 may have semi-circular grooves 19 for receiving the rods formed in the upper surface thereof, and suitable clamps (not shown) may be provided for holding the rods on the table in proper position during the loading procedure.

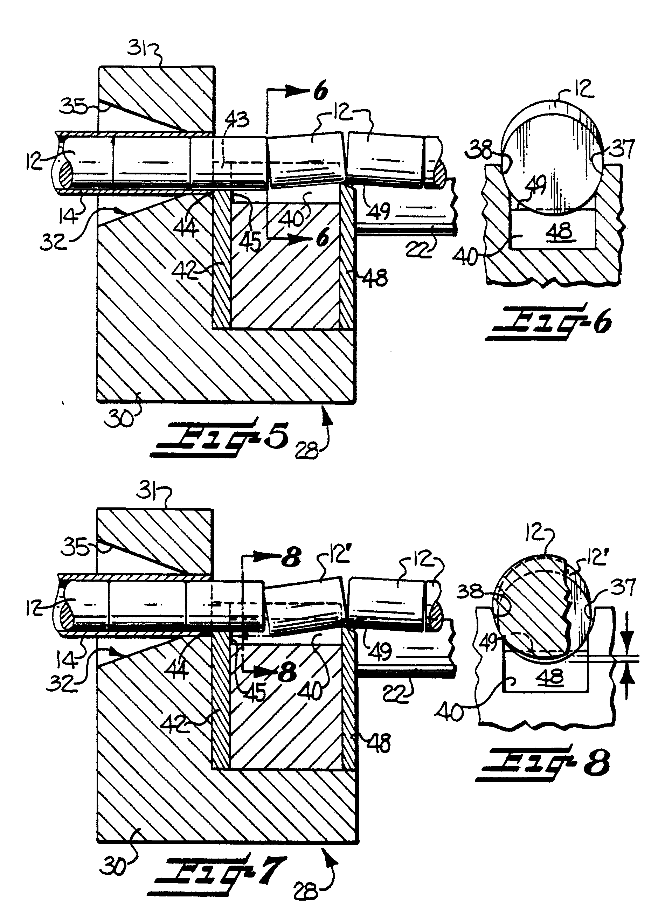

The apparatus 10 further includes pellet support means 20 positioned adjacent one end of the rod support means 16 and adapted to support a plurality of longitudinal columns of fuel pellets disposed end-to-end, and with the columns longitudinally aligned with respective ones of the fuel rods on the rod support means. The pellet support means 20 includes a plurality of laterally aligned guide surface means 21 (Fig. 4) each adapted to support a plurality of serially arranged and longitudinally oriented cylindrical pellets. More particularly, each guide surface means 21 includes a pair of laterally aligned cylindrical bars 22 which are laterally spaced apart a predetermined distance small enough for the two bars 22 to support the plurality of serially arranged pellets therebetween. The bars 22 are mounted on a supporting frame 24 (Fig. 1) which includes a vibratory feed support 26 for advancing the columns of pellets toward the fuel rods, i.e. toward the left as seen in Figure 1.

In accordance with the invention, a transition guide means 28 mounted between the pellet support means 20 and the rod support means 16 serves to guide the pellets into the fuel rods, the transition guide means 28 being adapted to detect and segregate any pellet having a diameter less than a predetermined desired minimum, and to preclude further longitudinal advance of such undersized pellet and of those pellets in the same column trailing it. The transition guide means 28 comprises a block 30 which extends laterally between the rod supporting table 17 and the pellet support bars 22 and includes an upright portion or leg 31 having bores 32 extending therethrough, each bore 32 being adapted to receive the end of one of the fuel rods 14 as best seen in Figures 3 and 4. More particularly, each bore 32 has a conical entrance portion 35 shaped to facilitate insertion of a fuel rod, and a cylindrical portion 34 with a diameter slightly and just sufficiently larger than the outside diameter of the fuel rod to enable an end portion of the latter to be slideably received in the cylindrical portion 34 in closely fitting relationship therewith.

On the upstream side (having regard to the direction of movement of the fuel pellets 12 during loading) of the upright leg 31 of the block 30 there is disposed a pellet segregating means 36 including pairs of laterally spaced tracks 37, 38 associated with the respective bores 32. The tracks 37, 38 of each pair extend, from points adjacent opposite sides of the associated bore 32, in parallel to an axis aligned with the longitudinal axis of the bore 32 and with a longitudinal centerline through the space between the associated guide bars 22, the arrangement and the spacing between each pair of tracks 37, 38 being such that the latter will receive properly sized pellets from the guide bars 22 and, supporting the pellets at the same elevation as they were supported by the bars 22, will guide the pellets toward and into the fuel rod 14 inserted in the associated bore 32. As shown, the tracks 37, 38 of each pair are curved around the aforesaid axis on a radius essentially corresponding to the radius of a properly sized fuel pellet 12. The area between and below the tracks 37, 38 is open to define a pellet receiving chamber 40 for a purpose described below.

The pellet segregating means 36 also includes a plate 42 positioned between the downstream ends of the tracks 37, 38 and the upright portion 31 of the block 30, the plate 42 extending parallel to and being in contact with the upstream side of the upright portion or leg 31. As best seen from Figure 4, the upper edge of the plate 42 has arcuate notches 43 formed therein in axial alignment with the respective bores 32 and pairs of tracks 37, 38 associated therewith, each notch 43 partially defining a circle which corresponds to the inner circumference of any of the tubular fuel rods 14 so that the plate 42 covers a lower portion of each bore 32 corresponding to the wall thickness of the tubular fuel rod, as seen best from Figure 2. Thus, the downstream face of the plate 42 forms, at the upstream end of each bore 32, an arcuate abutment 44 (Fig. 3) for properly positioning each fuel rod longitudinally upon insertion thereof into the respective bore 32. The upstream face of the plate 42 defines a shoulder 45 for engaging and stopping undersize pellets, as described below.

Extending parallel to the plate 42 and positioned adjacent the upstream ends of the tracks 37, 38 is a pellet deflecting plate 48 having a straight upper edge 49 which is disposed at an elevation sufficient to contact the lower front edge of each pellet as it advances from the bars 22 toward the tracks 37, 38, and which edge 49 is inclined in the upstream direction and downward, as seen best from Figure 3, so as to form a ramp for lifting the front ends of the advancing pellets (see Figures 5 and 7) and thereby causing each pellet, as it is advanced from the bars 22 and onto the tracks 37, 38, to be tilted out of flush end-to-end contact with the adjacent pellets in the same column.

In operation, the fuel rods 14 are initially positioned on the table 17, with the forward ends of the rods inserted into the associated bores 32 and in contact with the associated abutments or stops 44 on the plate 42. Fuel pellets arranged in columns corresponding in number to the number of fuel rods to be loaded are then loaded onto the bars 22 of the pellet support means 20. Thereafter, the vibratory feed supports 18 and 26 are activated so as to cause the columns of fuel pellets to advance along the bars 22, across the pellet deflecting plate 48, along the tracks 37, 38, and into the fuel rods 14. The vibration imparted to the rods 14 causes the pellets upon entry therein to continue to advance within the rods toward and to the fully loaded position.

Properly sized pellets will move across the deflecting plate 48 and onward along the tracks 37, 38 in the manner shown in Figures 5-6. On the other hand, any pellet having a diameter less than the predetermined desired minimum corresponding to the lateral spacing between the respective pair of tracks 37, 38 will drop at least partially into the chamber 40 and be held at an elevation below the level of the remaining pellets, as indicated at 12' in Figs. 7 and 8. The column of pellets, including the dropped pellet 12', keeps advancing until the latter comes up against the shoulder 45 of the plate 42 and there is stopped together with all the other pellets trailing it in the same column. This stoppage alerts the operator of the equipment to the presence of the undersized pellet 12' before it has entered the fuel rod 14, and enables him to remove the undersized pellet 12' and to replace it with a properly sized one.

Since the pellets abut each other end-to-end during their advance, it would be ordinarily possible for the two pellets immediately leading and trailing an undersized pellet to support the latter and to hold it at a normal elevation as it moves along the tracks 37, 38, in which event the undersized pellet would remain undetected and be loaded into the fuel rod. With the apparatus embodying the invention, this contingency is effectively avoided insofar as the pellet deflecting plate 48, in upsetting the longitudinal alignment of the pellets moving over it, momentarily breaks the flush frictional contact between the advancing pellets and thereby ensures that any undersized pellet is free to drop into the chamber 40 in the manner described above and as shown in Figs. 7 and 8.

## Claims

1. Apparatus for loading cylindrical pellets of predetermined diametric size into tubular rods, comprising rod support means (16) for supporting the tubular rods (14) in a generally horizontal disposition and in laterally spaced relationship with respect to each other, pellet support and guide means (20) for supporting the cylindrical pellets (12) arranged end-to-end in columns longitudinally aligned with the respective tubular rods supported on the rod support means, and means (26) for advancing the columns of pellets on the pellet support and guide means toward the respective tubular rods aligned therewith, characterized by transition guide means (28) interposed between the rod support means (16) and pellet support and guide means (20) for guiding the advancing columns of pellets into the respective tubular rods, said transition guide means (28) including pellet segregating means (36) which permit pellets of said predetermined diametric size to fully advance into the associated tubular rods, and cause pellets of less than said predetermined diametric size to drop to a lower level below the level of normally sized pellets in the advancing columns, and means (42) cooperable with each dropped pellet to prevent further advance thereof and of the pellets trailing the dropped pellet in the same column.

2. Apparatus according to claim 1, characterized in that said pellet segregating means (36) defines pairs of parallel spaced tracks (37,38) for receiving the pellets of the respective columns advancing from said pellet support and guide means (20), the spacing between each pair of parallel spaced tracks (37,38) being such as to enable pellets of said predetermined diametric size to proceed therealong and into the associated tubular rod, and to cause pellets of less than said predetermined diametric size to drop to said lower level through the space between the tracks.

3. Apparatus according to claim 2, characterized in that said pellet segregating means (36) includes pellet deflecting means (48) for momentarily upsetting each pellet, as it advances onto the associated pair of tracks (37,38), in a manner causing its frictional end-to-end contact with immediately leading and trailing pellets in the same column to be minimized.

4. Apparatus according to claim 1, 2 or 3, characterized in that said means (42) for preventing further advance of dropped pellets comprises stops (45) which protrude into the paths of movement of pellets having dropped to said lower level.

5. Apparatus according to claim 1, 2, 3 or 4, characterized in that said transition guide means (28) includes means (34) for ensuring and maintaining longitudinal alignment of the pellet-receiving end of each tubular rods on the rod support means (16) with the respective pellet segregating means (36) associated therewith.

6. Apparatus according to claim 1, 2, 3, 4 or 5, characterized in that said transition guide means (28) includes abutment means (44) cooperable with the pellet-receiving ends of the respective tubular rods on the rod support means (16) to determine and maintain the longitudinal disposition of said pellet-receiving ends relative to the respective pellet segregating means (36) associated therewith.

**Revendications**

1. Appareil pour charger des pastilles cylindriques de dimension de diamètre prédéterminée dans des barres tubulaires, comprenant un moyen (16) de support de barres pour supporter les barres tubulaires (14) dans une disposition horizontale d'une façon générale et en étant espacées latéralement les unes des autres, un moyen (20) de support et de guidage de pastilles pour supporter les pastilles cylindriques (12) disposées bout à bout en colonnes alignées longitudinalement avec les barres tubulaires respectives supportées par le moyen de support de barres, et un moyen (26) pour avancer les colonnes de pastilles sur le moyen de support et de guidage de pastilles en direction des barres tubulaires respectives alignées avec ce dernier, caractérisé par un moyen de guidage de transition (28) interposé entre le moyen (16) de support de barres et le moyen (20) de support et de guidage de pastilles pour guider les colonnes en cours d'avance de pastilles jusque dans les barres tubulaires respectives, ledit moyen de guidage de transition (28) comprenant un moyen (36) de séparation de pastilles qui permet aux pastilles ayant ladite dimension de diamètre prédéterminée d'avancer complètement jusque dans les barres tubulaires associées et de faire tomber les pastilles ayant une dimension inférieure à la dimension de diamètre prédéterminée précitée jusqu'à un niveau inférieur situé en-dessous du niveau des pastilles de dimension normale dans la colonne en cours d'avance, et un moyen (40) pouvant coopérer avec chaque pastille tombée pour empêcher celle-ci de continuer d'avancer et les pastilles situées dans la même colonne en arrière de la pastille tombée.

2. Appareil selon la revendication 1, caractérisé en ce que le moyen (36) de séparation de pastilles définit des paires de pistes parallèles espacées (37, 38) pour recevoir les pastilles des colonnes respectives avançant depuis ledit moyen (20) de support et de guidage de pastilles, l'espacement entre chaque paire de pistes espacées parallèles (37, 38) étant tel qu'il permet au pastilles ayant ladite dimension de diamètre prédéterminée de continuer à avancer le long des pistes et de pénétrer dans la barre tubulaire associée, et qui entraîne la chute des pastilles ayant une dimension de diamètre inférieure à la dimension de diamètre prédéterminée précitée jusqu'audit niveau inférieur à travers l'espace entre les pistes.

3. Appareil selon la revendication 2, caractérisé en ce que le moyen (36) de séparation de pastilles comprend un moyen (48) de déviation de pastilles pour momentanément refouler chaque pastille, au fur et à mesure qu'elle avance sur la paire associée de pistes (37, 38), de manière à réduire à un minimum son contact de frottement bout à bout avec les pastilles situées immédiatement devant et derrière dans la même colonne.

4. Appareil selon la revendication 1, 2 ou 3, caractérisé en ce que le moyen (42) servant à empêcher les pastilles tombées de continuer d'avancer comprend des butées (45) qui font saillie dans le trajet de déplacement des pastilles tombées jusqu'audit niveau inférieur.

5. Appareil selon la revendication 1, 2, 3 ou 4, caractérisé en ce que le moyen de guidage de transition (28) comprend un moyen (34) pour assurer et maintenir l'alignement longitudinal de l'extrémité réceptrice de pastilles de chaque barre tubulaire sur le moyen (16) de support de barres avec le moyen (36) de séparation de pastilles correspondant associé à ce moyen de support.

6. Appareil selon la revendication 1, 2, 3, 4 ou 5, caractérisé en ce que le moyen de guidage de transition (28) comprend une butée (44) pouvant coopérer avec les extrémités réceptrices de pastilles des barres tubulaires respectives se trouvant sur le moyen (16) de support de barres pour déterminer et maintenir la disposition longitudinale desdites extrémités réceptrices de pastilles par rapport au moyen correspondant (36) de séparation de pastilles associé à ce moyen de support.

**Ansprüche**

1. Gerät zum Einfüllen zylinderförmiger Pellets vorbestimmter Durchmessergrößen in rohrförmige Stäbe, mit einem Stabauflagermittel (16) zum Auflagern der rohrförmigen Stäbe (14) in allgemein horizontaler Lage mit seitlichen Abständen voneinander, Pelletauflager- und -führungsmitteln (20) zum Auflagern der zylinderförmigen Pellets (12), die Ende an Ende in Reihen angeordnet sind, die jeweils in Längsrichtung mit einem der rohrförmigen Stäbe ausgerichtet sind, die auf dem Stabauflagermittel aufgelagert sind, und Mitteln (26) zum Vorrücken der Reihen von Pellets auf den Pelletauflager- und -führungsmitteln zu den jeweilig damit ausgerichteten rohrförmigen Stäben hin, gekennzeichnet durch ein Übergangsführungsmittel (28), das zum Führen der vorrückenden Reihen von Pellets in die jeweiligen rohrförmigen Stäbe zwischen dem Stabauflagermittel (16) und den Pelletauflager- und -führungsmitteln (20) eingesetzt ist, wobei das Übergangsführungsmittel (28) Pelletaussonderungsmittel (36) umfaßt, welche es den Pellets der vorbestimmten Durchmessergrößen erlauben, ganz in die zugehörigen rohrartigen Stäbe hinein vorzurücken, und welche ein Herabfallen von Pellets mit geringeren Größen als die vorbestimmten auf eine tiefere, unterhalb der Ebene der Pellets normaler Größen in den vorrückenden Reihen liegenden Ebene zu bewirken, und Mitteln (42), die mit jedem herabgefallenen Pellet zusammenwirken zum Verhindern, daß dieses und die in der gleichen Reihe dem gefallenen Pellet nachfolgenden Pellets weiter vorrücken.

2. Gerät nach Anspruch 1, dadurch gekennzeichnet, daß das Pelletaussonderungsmittel (36) Paare von parallelen, im Abstand voneinander liegenden Führungsbahnen (37, 38) zum Aufnehmen der Pellets der jeweiligen Reihe bildet, die von den Pelletauflager- und -führungsmitteln (20) her vorrücken, wobei der Abstand zwischen jedem Paar der parallel und im Abstand voneinander liegenden Führungsbahnen (37, 38) derart ist, daß sich Pellets der vorbestimmten Durchmessergrößen entlang diesen und in den jeweils zugeordneten rohrförmigen Stab hinein fortbewegen können und ein Herabfallen von Pellets von geringeren Durchmessergrößen als die vorbestimmten auf die tiefere Ebene durch den Zwischenraum zwischen den Führungsbahnen bewirkt wird.

3. Gerät nach Anspruch 2, dadurch gekennzeichnet, daß das Pelletaussonderungsmittel (36) Pelletablenkmittel (48) umfaßt, die jedes Pellet bei seinem Vorrücken auf das zugehörige Paar von Führungsbahnen (37, 38) in der Weise kurzzeitig kippen, daß sein Reibungsendkontakt mit den unmittelbar vorhergehenden und nachfolgenden Pellets in der gleichen Reihe auf ein Minimum verringert wird.

4. Gerät nach Anspruch 1, 2 oder 3, dadurch gekennzeichnet, daß das Mittel (42) zum Verhindern eines weiteren Vorrückens der herabgefallenen Pellets Anschläge (45) umfaßt, die in die Bewegungsbahnen der Pellets hineinragen, die auf die tiefere Ebene herabgefallen sind.

5. Gerät nach Anspruch 1, 2, 3 oder 4, dadurch gekennzeichnet, daß das Übergangsführungsmittel (28) Mittel (34) zum Gewährleisten und Aufrechterhalten der Ausrichtung in Längsrichtung des Pelletaufnahmeendes jedes rohrförmigen Stabes auf dem Stabauflagermittel (16) mit dem jeweiligen, dazu zugehörigen Pelletaussonderungsmittel (36) umfaßt.

6. Gerät nach Anspruch 1, 2, 3, 4 oder 5, dadurch gekennzeichnet, daß das Übergangsführungsmittel (28) Anschlagmittel (44) umfaßt, die zum Festlegen und Aufrechterhalten der Längsausrichtung der Pelletaufnahmeenden relativ zu dem jeweiligen zugehörigen Pelletaussonderungsmittel (36) mit den Pelletaufnahmeenden der jeweiligen rohrförmigen Stäbe auf dem Stabauflagermittel (16) zusammenwirken.

FIG-1

10
14
12
22
20
VIBRATORY FEED SUPPORT
26
24
19
17
16
VIBRATORY FEED SUPPORT
18
28

FIG-2

14    35    34
44
43
3

31
35
14
41    36
34    43    38
12
32
49
30    44    42    45    40    48    22

FIG-3

14    28
14
14    12
36
31    12
43
14    21
38
35    37    21
30    40    21
42    22
48

FIG-4

7

FIG-5

FIG-6

FIG-7

FIG-8